Europäisches Patentamt

European Patent Office

Office européen des brevets

(11) Publication number: **0 585 962 A1**

# EUROPEAN PATENT APPLICATION

(21) Application number: **93115835.6**

(22) Date of filing: **17.05.89**

(51) Int. Cl.⁵: **H04N 1/40, H04N 1/46**

This application was filed on 30 - 09 - 1993 as a divisional application to the application mentioned under INID code 60.

(30) Priority: **18.05.88 JP 121392/88**

(43) Date of publication of application:
**09.03.94 Bulletin 94/10**

(60) Publication number of the earlier application in accordance with Art.76 EPC: **0 342 640**

(84) Designated Contracting States:
**DE FR GB**

(71) Applicant: **FUJI PHOTO FILM CO., LTD.**
**210 Nakanuma**
**Minami-Ashigara-shi**
**Kanagawa(JP)**

(72) Inventor: **Urabe, Hitoshi**
**798 Miyanodai**
**Keisei-Machi**
**Ashigara-Kamigun Kanagawa(JP)**
Inventor: **Morikawa, Seiichiro**
**798 Miyanodai**
**Keisei-Machi**
**Ashigara-Kamigun Kanagawa(JP)**

(74) Representative: **Patentanwälte Grünecker,**
**Kinkeldey, Stockmair & Partner**
**Maximilianstrasse 58**
**D-80538 München (DE)**

(54) **Halftone gradation image signal generating apparatus.**

(57) The invention is related to a halftone gradation image signal generating apparatus for preparing a multi-color separated halftone gradation image which is printable and reproducible by superposing a continuous-tone color image signal obtained by scanning an original comprising continuous-tone color images with a halftone screen signal generated electrically, which comprises a first counter (14) to count a clock signal of a main scanning direction of the continuous-tone iamge signal and to output a first address signal, a second counter (16) to count a clock signal of an auxiliary scanning direction of the continuous-tone image signal and to output a second address signal, a halftone data memory (20) which stores desired data out of plural halftone original data predetermined in accordance with levels of a screen angle and halftone resolution which have been transferred, and address converting section (18) which accesses said halftone data memory (20) in accordance with the first and second address signals, a line memory (22) which inputs the continuous-tone image signal and the clock signal of the main scanning direction and then stores same, and a binary signal generating section (24) which outputs a halftone gradation image signal by comparing an output of said halftone data memory (20) and an output of said line memory (22).

F I G. 4

This invention relates to a halftone gradation image signal generating apparatus for preparing a multi-color separated halftone gradation image.

In the fields of printing and plate-making, an image scanning/reading/recording system has been widely used in recent years, since same can electrically process image information of an original and prepare an original film plate for printing to thereby rationalize the work process and improve the image quality.

Such an image scanning/reading/recording system comprises basically an input section, a control section and an output section. More particularly, the input section of the system picks up image signals by a lighting system, a color separation system and a photometry mechanism, and converts same into the image information photoectrically. The control section arithmetically processes the image information for gradation correction, color correction, contour emphasis, conversion from R (red), G (green), B (blue) to C, M, Y, K and the like, in accordance with plate-making conditions. Then, the processed image information is converted again at the output section into optical signals, such as laser beams, to record images on a recording carrier comprising a photosensitive material. Next, the recording carrier is subsequently developed by a predetermined developing device and used as the orignial film plate for printing and so on.

When the original is of continuous tone images, such as a picture or a photograph, it is necessary to separate the original into dots to express the degree of density. The continuous tone image is converted into a halftone image which is a group of dots formed in different dimensions in accordance with the degree of density of the image. A method has been proposed for separating an original into dots by placing a contact screen comprising dots in different gradation in a net form on a film and exposing the recording carrier with optical signals corresponding to the original continuous tone images. In the image scanning/reading/recording system, a halftone screen which is a counterpart of such a contact screen may be formed electrically.

Figure 1 shows a prior art known from Japanese Patent Publication (KOKOKU) No.49361/1977, wherein the reference numeral 100 denotes a basic periodic section of an electrically formed halftone screen. The halftone screen is formed by repetition of the same pattern and the minimum unit of the pattern is the basic periodic section 100, which comprises eight scanning lines $S_1$ through $S_8$ which are arranged in the direction of Y in parallel to each other. Each part of the section 100 is defined with voltage signals unique to the scanning lines $S_1$ through $S_8$ which respectively change along the recording direction X. The respective voltages of the scanning lines $S_1$, $S_2$, $S_4$, and $S_5$ are set at high voltages when they are passing a point A to a point D in a dot 101, while the voltage of the scanning line $S_3$ at the point E is set low. The voltages of the scanning lines $S_1$ through $S_5$ are set to gradually decrease from the points A through D toward the point E. The voltage signals of the scanning lines $S_1$ through $S_8$ can form halftone screen signals of the respective scanning lines by superposing a plurality of alternating voltage signals of different periods and of a triangle shape, and by gradually shifting the phase thereof for each scanning line.

When multi-colored images are converted into dots for reproduction, it is necessary to generate a plurality of halftone screens and to superpose thus formed halftone gradation images. Each halftone screen is rotated by a predetermined angle θ from the recording direction X in order to prevent generation of Moire pattern when the halftone images are superposed.

The basic periodic section 100 is generated periodically at a frequency sufficient for covering all the scanning zones of the original to form the halftone screen. The halftone screen signals which form the halftone screen are superposed with the image signals which are read out from the original optically at the input section of the image scanning/reading recording system to form the halftone images on the original film plate.

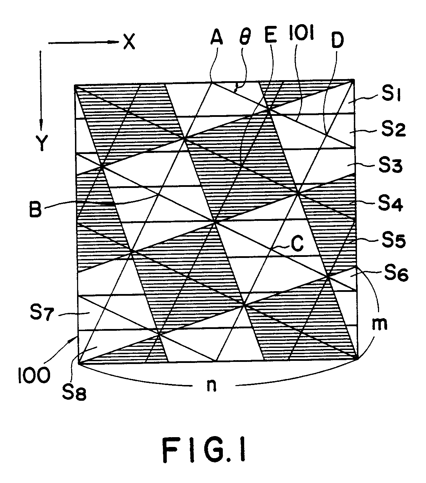

A halftone plate for color printing an area modulation type can be identified with the number of screen lins (eg. line number/inch, LPI), screen angle (m/n), and dot patterns. The screen angle is a rational number defined by m/n, as shown in Figure 1, and is necessary for each of the four colors, C, M, Y, and K. The screen angle and the dot patterns may be formed by the technique disclosed in Japanese Patent Publication No. 49361/1977. The screen line number may be obtained arbitrarily for the color scanner of a drum type by simply changing the magnification with an optical zoom. However, it is not easy to use an optical zoom for the color scanner of a flat bed (plane) type. Due to its high speed processing, the color scanner of a flat bed type is required to conduct main scanning of light spots optically, and an addition of a zooming mechanism to the system is almost impossible. The control system is further complicated and enlarged, if the size of a light spot or pitch is changed.

## SUMMARY OF THE INVENTION

It is the object of the present invention to eliminate the problems encountered in the prior art and to provide an improved halftone gradation image signal generating apparatus.

This object is solved by a halftone gradation image signal generating apparatus having the features of claim 1.

The nature, principle, and utility of the invention will become more apparent in the following detailed description, when read in conjunction with the accompanying drawings.

## BRIEF DESCRIPTION OF THE DRAWINGS

In the accompanying drawings:

Figure 1 is a view to show a basic periodic section of a halftone screen:

Figure 2 is an explanatory view of the halftone screen signal;

Figure 3 is a block diagram to show a circuit which forms the halftone images signal;

Figure 4 is a block diagram to show details of an embodiment of an address converting section 18; and

Figure 5 is a view to show an embodiment of an off-set table.

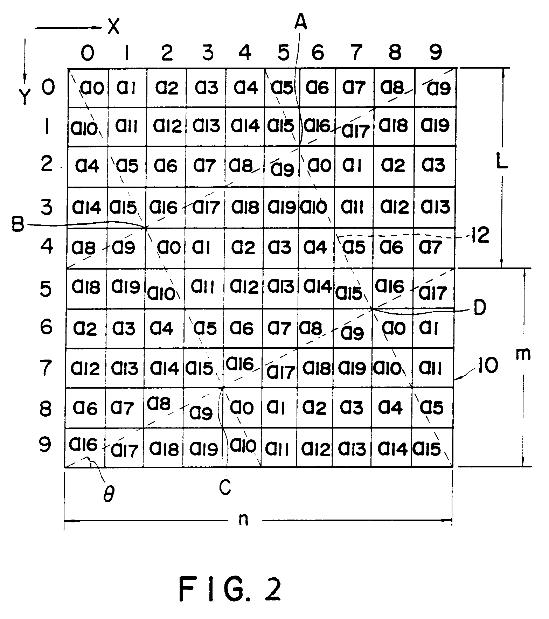

Figure 2 shows an embodiment of halftone screen signals, and, more particularly, a basic periodic section 10 of the halftone screen comprising 100-halftone data. In the Figure, the basic periodic section 10 has a halftone portion 12 which is surrounded by the points A through D and inclined at the screen angle of $\theta$.

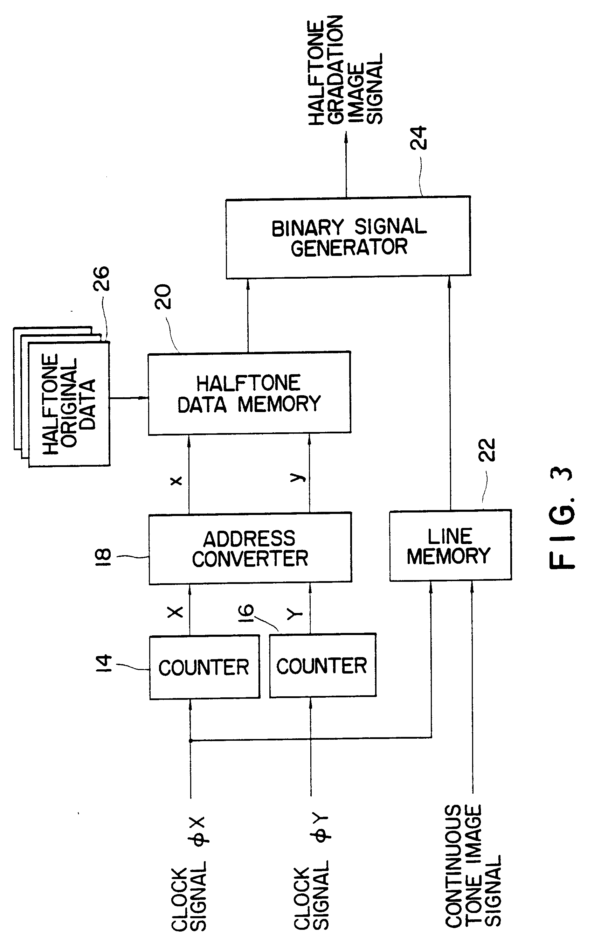

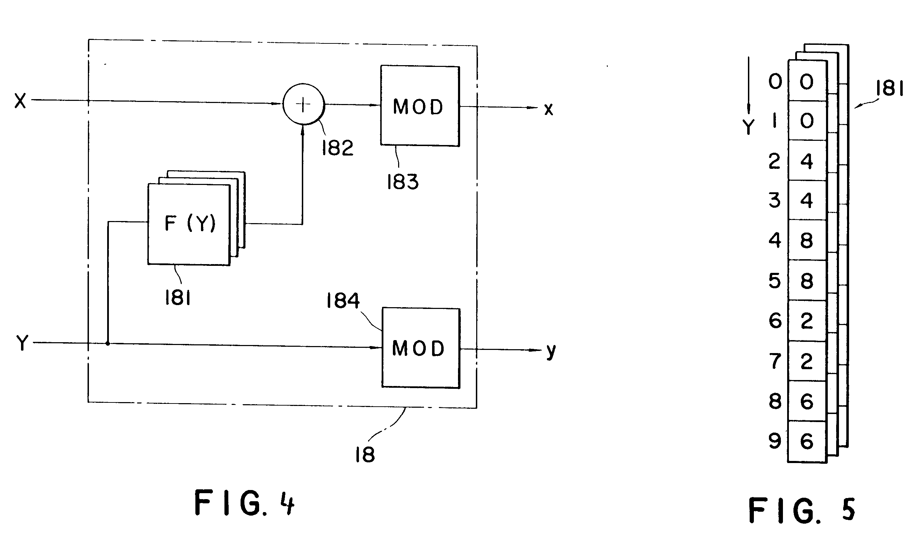

Figure 3 shows an embodiment of the circuit for forming the halftone gradation image signal. The halftone gradation image signal generating circuit comprises two counters 14 and 16, an address converter 18, a halftone data memory 20, a line memory 22, and a binary signal generator 24. The halftone data memory 20 stores desired data out of the plural halftone original data 26 predetermined in accordance with the levels of the screen angle $\theta$ and the halftone resolution which have been transferred. The counter 14 counts the clock signal $\phi_x$ in the main scanning direction of the continuous tone image and supplies the result as an address signal X to the address converting section 18. The counter 16 counts the clock signal $\phi_y$ in the auxiliary scanning direction of the continuous tone image and supplies the result as an address signal Y to the address converter 18, which converts the address signals (X,Y) of the halftone data at the basic periodic section 10 into the addresss signals (x,y) at the halftone data $a_0$ through $a_{19}$ which have been stored in the halftone data memory 20. Figure 4 shows its structure. The address converter 18 includes a remainder calculating section 183 which is supplied with the addresss signal X via an adder 182 and a remainder calculating section 184 which is supplied with the address signal Y. The adder 182 is supplied with an additional signal F(Y) which is selected by the address signal Y from an off-set table 181. The off-set table 181 comprises plural data which are determinable combinations of the screen angle $\theta$ and the level of the halftone resolution in a manner similar to the halftone original data 26. The remainder calculating section 183 calculates the address signal X based on the arithmetic equation below:

$$x = MOD(X + F(Y), N_X) \qquad (1),$$

wherein the numeral $N_x$ denotes the number of the halftone data in the direction of n of X.

The remainder calculating section 184 calculates the address signal $\underline{y}$ based on the arithmetic equation below, wherein $N_y$ denotes the number of the halftone data in the direction of Y:

$$y = MOD(Y, N_y) \qquad (2).$$

The line memory 22 is supplied with the continuous tone image signal of the main scanning direction and the clock signal $\phi_x$, and the outputs from the line memory 22 and the halftone data memory 20 are respectively supplied to the binary signal generator 24. The binary signal generator 24 compares the halftone data with the image signal and outputs the results as the halftone image signal.

Description will now be given to the case where the continuous tone image signal is to be converted into a halftone image signal by using the basic periodic section 10 shown in Figure 2.

The halftone original data 26 stores the halftone data corresponding to the screen angle $\theta$ and the level of the halftone separation. Out of such halftone data are selected the halftone data $a_0$ through $a_{19}$ which are loaded at the address (x,y) of the halftone data memory 20. In this case, the address (x,y) is set within the scope ranging from (0,0) to (9,1). Therefore, when an address signal (X,Y) is inputted to the address converter 18 from the counters 14 and 16 based on the clock signals $\phi_x$ and $\phi_y$, the address converter 18 converts them into the address halftone data $a_0$ through $a_{19}$. In other words, if the relation of (X,Y) = (0,0) holds, since the addition signal F(Y) is set at "0" in the off-set table 181 in Figure 5, the output signals x,y from the remainder calculating section 183 and 184 become "0", respectively, in accordance with the equations (1) and (2). The address converter 18 accesses the halftone data $a_0$ at the address of (x,y) = (0,0) from the halftone data memory 20 and supplies the data to the binary signal generator 24. When the address signals (X,Y) from the counters 14 and 16 are (0,2), the addition signal F(Y) becomes "4", according to Figure 5. This causes (x,y) to become (4,0) from the above equations (1) and (2). Therefore, the address converter 18 selectes the halftone data $a_4$ out of the halftone data $a_0$

through $a_{19}$ which has been stored in the halftone data memory 20 and supplies same to the binary signal generator 24. In a manner similar to the above, the halftone data $a_0$ through $a_{19}$ are supplied respectively to the binary signal generator 24.

The binary signal generator 24 is supplied with the continuous tone image signal stored in the line memory 22 based on the clock signal $\phi_x$ in addition to the halftone data $a_0$ through $a_{19}$. The binary signal generator 24 compares the halftone data $a_0$ through $a_{19}$ with the continuous tone image signal and outputs the result as the halftone image signal which is in the form of ON/OFF signals. The halftone image signal is converted into an optical signal, such as a laser beam, and irradiated by a light beam scanning apparatus on a film to form the halftone images.

**Claims**

1. A halftone gradation image signal generating apparatus for preparing a multi-color separated halftone gradation image which is printable and reproducible by superposing a continuous-tone color image signal obtained by scanning an original comprising continuous-tone color images with a halftone screen signal generated electrically, which comprises a first counter (14) to count a clock signal of a main scanning direction of the continuous-tone iamge signal and to output a first address signal, a second counter (16) to count a clock signal of an auxiliary scanning direction of the continuous-tone image signal and to output a second address signal, a halftone data memory (20) which stores desired data out of plural halftone original data predetermined in accordance with levels of a screen angle and halftone resolution which have been transferred, and address converting section (18) which accesses said halftone data memory (20) in accordance with the first and second address signals, a line memory (22) which inputs the continuous-tone image signal and the clock signal of the main scanning direction and then stores same, and a binary signal generating section (24) which outputs a halftone gradation image signal by comparing an output of said halftone data memory (20) and an output of said line memory (22).

FIG.1

F I G. 2

FIG. 3

EP 0 585 962 A1

FIG. 4

FIG. 5

EP 0 585 962 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 350 996 (ROSENFELD)<br>* abstract; figures 1,5 *<br>* column 4, line 7 - column 5, line 22 *<br>* column 7, line 19 - line 52 *<br>* column 9, line 8 - line 39 *<br>--- | 1 | H04N1/40<br>H04N1/46 |
| A | GB-A-2 026 283 (DR.-ING RUDOLF HELL)<br>* page 4, line 23 - line 36 *<br>* page 4, line 77 - line 86 *<br>* abstract *<br>----- | 1 | |
| | | | **TECHNICAL FIELDS SEARCHED (Int. Cl.4)**<br><br>H04N |

The present search report has been drawn up for all claims

| Place of search | Date of completion of the search | Examiner |
|---|---|---|
| BERLIN | 28 OCTOBER 1993 | JONSSON B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)